# EUROPÄISCHE PATENTANMELDUNG

(11) **EP 4 644 295 A2**
(43) Veröffentlichungstag der Anmeldung: **05.11.2025**
(21) Anmeldenummer: 25178890.7
(22) Anmeldetag: 24.09.2020
(51) Int. Cl.: B65G 1/04

(54) **LAGER- UND ENTNAHMESYSTEM FÜR BEHÄLTER**

(30) Priorität: 24.09.2019 DE 102019214608
(62) Teilanmeldung aus: 20198123.0
(71) Anmelder: Gebhardt Fördertechnik GmbH, D-74889 Sinsheim (DE)
(72) Erfinder: Gebhardt, Marco, 74889 Sinsheim (DE)
(74) Vertreter: Ullrich & Naumann PartG mbB

(57) **Zusammenfassung**

Ein Transportfahrzeug, insbesondere zum Einsatz in einem Lager- und Entnahmesystem für Behälter, umfasst
einen Fahrzeugkörper (1),
ein mit dem Fahrzeugkörper (1) verbundenes Fahrwerk, wobei das Fahrwerk zwei x-Radsätze (2, 2') umfasst, die für eine Bewegung des Transportfahrzeugs entlang von Längstransportwegen in einer Längsrichtung (x) eingerichtet sind, und wobei das Fahrwerk zwei z-Radsätze (3, 3') umfasst, die für eine Bewegung des Transportfahrzeugs entlang von Quertransportwegen in einer Querrichtung (z) eingerichtet sind, und
einen Radpositionierungsmechanismus, der eingerichtet ist, selektiv entweder die Räder der x-Radsätze (2, 2') mit den Längstransportwegen oder die z-Radsätze (3, 3') mit den Quertransportwegen in Kontakt zu bringen, um so eine Bewegung des Transportfahrzeugs entweder in die Längsrichtung oder in die Querrichtung zu ermöglichen.

Im Hinblick auf eine problemlose Adaption des Radpositionierungsmechanismus an unterschiedliche Fahrzeuggrößen weist der Radpositionierungsmechanismus Antriebsmittel (4) auf, die jeweils auf die Räder eines Rad-Paares gemeinsam einwirken, wobei ein Rad-Paar jeweils ein Rad eines x-Radsatzes (2, 2') und ein hierzu über Eck benachbartes Rad eines z-Radsatzes (3, 3') umfasst.

## Beschreibung

Die Erfindung betrifft ein Transportfahrzeug, insbesondere zum Einsatz in einem Lager- und Entnahmesystem für Behälter, umfassend einen Fahrzeugkörper, ein mit dem Fahrzeugkörper verbundenes Fahrwerk, wobei das Fahrwerk zwei x-Radsätze umfasst, die für eine Bewegung des Transportfahrzeugs entlang von Längstransportwegen in einer Längsrichtung (x) eingerichtet sind, und wobei das Fahrwerk zwei z-Radsätze umfasst, die für eine Bewegung des Transportfahrzeugs entlang von Quertransportwegen in einer Querrichtung eingerichtet sind, und einen Radpositionierungsmechanismus, der eingerichtet ist, selektiv entweder die Räder der x-Radsätze mit den Längstransportwegen oder die z-Radsätze mit den Quertransportwegen in Kontakt zu bringen, um so eine Bewegung des Transportfahrzeugs entweder in die Längsrichtung oder in die Querrichtung zu ermöglichen.

Des Weiteren betrifft die Erfindung ein Lager- und Entnahmesystem für Behälter, umfassend eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Behältern aufzunehmen, und wobei die Gitterstruktur Längstransportwege in einer Längsrichtung (x) und Quertransportwege in einer Querrichtung (z) definiert.

Transportfahrzeuge der in Rede stehenden Art zum Einsatz in Lager- und Entnahmesystemen für Behälter sind seit einigen Jahren aus der Praxis bekannt und finden insbesondere in speziellen automatisierten Blocklagern Verwendung. Diese speziellen Warenlager sind entwickelt worden, um herkömmliche Warenlager insbesondere im Hinblick auf die realisierbare Lagerdichte zu verbessern. Bei herkömmlichen Warenlagern befindet sich das Lagergut üblicherweise in Lagerbehältern, welche in Regalen gelagert werden, die in Regalreihen angeordnet sind. Jeder Lagerbehälter enthält dabei eine Vielzahl von Produkten eines Produkttyps. Die Bedienung eines solchen Warenlagers erfolgt über Freiräume zwischen den Regalreihen, den sogenannten Lagergassen, in denen mittels eines Transportsystems, bspw. einem Regalbediengerät oder einem Shuttle-System, die einzelnen Regalfächer angefahren werden können. Da die Lagergassen für die eigentliche Lagerung nicht zur Verfügung stehen, ist die Lagerdichte derartiger Warenlager relativ niedrig. Mit anderen Worten ist die Größe des tatsächlich für die Lagerung von Produkten zur Verfügung stehenden Raums relativ klein im Vergleich zu der Größe des Raums, der für das Warenlager insgesamt erforderlich ist.

Demgegenüber verfolgen die oben angesprochenen automatisierten Blocklager (sog. Gridstores) einen alternativen Ansatz. Danach werden die Lagerbehälter nicht mehr in konventionellen Regalen gelagert, sondern die Lagerbehälter werden in einem selbsttragenden modularen Aluminiumraster, welches vertikale Schächte definierter Größe bildet, übereinandergestapelt. Die Stapel sind dabei in einer Längsrichtung und in einer Querrichtung in Reihen angeordnet. Auf die einzelnen Lagerbehälter wird von oben mittels geeigneter Transportfahrzeuge zugegriffen, die sich üblicherweise auf entsprechenden Fahrschienen bewegen, die in Form einer 2D Matrix auf der Regalstruktur angeordnet sind. Dementsprechend müssen zwischen den Reihen keine Lagergassen ausgebildet sein, weshalb diese Lagerstruktur eine deutliche Verbesserung der Lagerungsdichte bietet. Derartige automatisierte Blocklager, die eines der Hauptanwendungsfelder für Transportfahrzeuge gemäß Ausführungsformen der vorliegenden Erfindung bilden, sind teilweise auch unter der Kennzeichnung AutoStore^{®} bekannt.

Die WO 2017/153583 A1 zeigt ein derartiges Lagersystem zusammen mit einem entsprechenden Transportfahrzeug. Das Transportfahrzeug, welches einen zentralen, nach unten geöffneten Hohlraum zur Aufnahme von Transportgut in Form von genormten Lagerbehältern umfasst, verfügt über zwei Radsätze mit jeweils vier Rädern, wobei einer der Radsätze für eine Bewegung des Transportfahrzeugs auf einer gitterförmigen Schienenstruktur in einer Längsrichtung (x) und der andere Radsatz für eine Bewegung in einer dazu orthogonalen Querrichtung (y) ausgelegt ist.

Für die Ausführung von Richtungswechseln können die Radsätze in einer vertikalen Richtung bewegt werden, um somit von der Schienenstruktur abgehoben bzw. auf diese abgesenkt zu werden. Im Konkreten ist hierzu ein Radpositionierungsmechanismus mit mindestens zwei Motoren vorgesehen, wobei der eine Motor die beiden an einer Seitenwand des Fahrzeugkörpers angeordneten Räder eines ersten Radsatzes bewegt, während der andere Motor die beiden an der gegenüberliegenden Seitenwand des Fahrzeugkörpers angeordneten Räder desselben Radsatzes bewegt. Die Räder des zweiten Radsatzes sind entweder fest an dem Fahrzeugkörper montiert oder verfügen ebenfalls über einen Radpositionierungsmechanismus mit zwei Motoren, welcher entsprechend dem Radpositionierungsmechanismus für den ersten Radsatz funktioniert und mit diesem in geeigneter Weise synchronisiert ist.

Das aus der WO 2017/153583 A1 bekannte Transportfahrzeug erweist sich dahingehend als nachteilig, dass die Mechanik des Radpositionierungsmechanismus zur Realisierung von optimalen Fahreigenschaften stets auf die jeweilige Größe des Fahrzeugkörpers des Transportfahrzeugs abgestimmt sein muss. Würde man den Radpositionierungsmechanismus, so wie er in der WO 2017/153583 A1 für eine bestimmte Fahrzeuggröße gezeigt ist, bspw. an einem (deutlich) größeren Transportfahrzeug 1:1 verbauen, würden sich für dieses größere Transportfahrzeug ungünstig kleine Radstände ergeben, die bspw. ein kritisches Kippen des Transportfahrzeugs bei dynamischen Beschleunigungen zur Folge haben können. Eine Montage des in der WO 2017/153583 A1 gezeigten Radpositionierungsmechanismus an einem (deutlich) kleineren Transportfahrzeug ist sogar unmöglich. Dementsprechend erfordert jede Fahrzeuggröße einen eigens angepassten und entsprechend dimensionierten Radpositionierungsmechanismus.

Der vorliegenden Erfindung liegt daher die Aufgabe zugrunde, ein Transportfahrzeug der eingangs genannten Art derart auszugestalten und weiterzubilden, dass die oben genannten Nachteile nach Möglichkeit vermieden sind und eine weitestgehend problemlose Adaption des Radpositionierungsmechanismus an unterschiedliche Fahrzeuggrößen ermöglicht ist.

Erfindungsgemäß wird die voranstehende Aufgabe durch die Merkmale des Anspruchs 1 gelöst. Danach ist das in Rede stehende Transportfahrzeug dadurch gekennzeichnet, dass der Radpositionierungsmechanismus Antriebsmittel aufweist, die jeweils auf die Räder eines Rad-Paares gemeinsam einwirken, wobei ein Rad-Paar jeweils ein Rad eines x-Radsatzes und ein hierzu über Eck benachbartes Rad eines z-Radsatzes umfasst.

In erfindungsgemäßer Weise ist erkannt worden, dass sich durch eine Kopplung von über Eck zueinander benachbarten Rädern eines Transportfahrzeugs in der Weise, dass ein Antriebsmittel eines Radpositionierungsmechanismus auf diese beiden Räder gemeinsam einwirkt, diverse Vorteile erzielen lassen. So ergibt sich insbesondere eine vereinfachte Skalierbarkeit des Transportfahrzeugs für unterschiedliche Fahrzeuggrößen. Die gesamte Mechanik des Radpositionierungsmechanismus zum Anheben bzw. Absenken der Räder des Transportfahrzeugs ist bei dem erfindungsgemäß vorgeschlagenen Transportfahrzeug vollkommen unabhängig von den jeweiligen Abmessungen des Fahrzeugkörpers des Transportfahrzeugs. Dementsprechend können - größenunabhängig - überwiegend Gleichteile verwendet werden, wodurch sich eine problemlose mechanische Anpassung des Radstandes des Transportfahrzeugs ergibt. Für erfindungsgemäße Transportfahrzeuge kann quasi immer ein maximal möglicher Radstand realisiert werden, was einem Kippen des Transportfahrzeugs bei dynamischen Beschleunigungen effektiv entgegenwirkt.

In einer bevorzugten Ausgestaltung umfasst jeder Radsatz des Transportfahrzeugs zwei Räder, die beabstandet zueinander an einer jeweiligen Seitenwand des Fahrzeugkörpers angeordnet sind. In diesem Fall bilden sämtliche Räder des Transportfahrzeugs entsprechende Rad-Paare mit jeweils einem Rad eines x-Radsatzes sowie einem hierzu über Eck benachbarten Rad eines z-Radsatzes und können dementsprechend durch einen Radpositionierungsmechanismus mit insgesamt vier Antriebsmitteln bewegt werden. Alternativ hierzu ist es auch denkbar, dass einer oder mehrere der Radsätze ein im Wesentlichen mittig positioniertes zusätzliches drittes Rad umfasst, was sich insbesondere bei größer dimensionierten Transportfahrzeugen bspw. unter Stabilitätsaspekten als sinnvoll erweisen kann. Für dieses zusätzliche Rad könnte dabei ein separater Radpositionierungsmechanismus vorgesehen sein.

In vorteilhafter Weise sind die Antriebsmittel des Radpositionierungsmechanismus derart eingerichtet, dass sie ein Rad des jeweiligen Rad-Paares anheben und gleichzeitig das andere Rad des jeweiligen Rad-Paares absenken. Auf diese Weise lässt sich ein besonders schneller Radwechsel für eine Änderung der Bewegungsrichtung des Transportfahrzeugs ausführen.

In weiter vorteilhafter Weise sind die Antriebsmittel des Radpositionierungsmechanismus miteinander synchronisiert, so dass eine Positionsveränderung (d.h. ein Anheben bzw. ein Absenken) für sämtliche Räder des Transportfahrzeugs gleichzeitig erfolgt. Gemäß einer alternativen Ausgestaltung können auch nur die beiden Räder eines jeweiligen Rad-Paares permanent synchronisiert sein, während die einzelnen Antriebsmittel des Radpositionierungsmechanismus untereinander nicht synchronisiert sind, sondern unabhängig voneinander betrieben werden.

Im Rahmen einer bevorzugten Ausführungsform kann eine Anordnung der Räder am Fahrzeugkörper des Transportfahrzeugs derart vorgesehen sein, dass während eines von dem Radpositionierungsmechanismus bewirkten Radwechsels ein ununterbrochener Kontakt von Rädern mit den jeweiligen Transportwegen gegeben ist. Mit anderen Worten setzen somit bspw. bei einem Anheben der Räder der x-Radsätze von den Längstransportwegen die Räder der z-Radsätze auf den Quertransportwegen auf, bevor der eigentliche Fahrzeugkörper des Transportfahrzeugs in Kontakt mit dem Boden gelangt. Eine alternative Ausgestaltung, bei welcher der Fahrzeugkörper bei einem Radwechsel kurzzeitig aufsetzt, kann grundsätzlich ebenfalls realisiert werden, bspw. mittels einer höheren Radaufhängung am Fahrzeugkörper.

Im Hinblick auf eine möglichst einfache Konstruktion des Radpositionierungsmechanismus kann vorgesehen sein, dass die Antriebsmittel jeweils gegenläufig auf die beiden Räder des jeweiligen Rad-Paares einwirken. Im Rahmen von konkreten Ausführungsformen können die Antriebsmittel hierzu bspw. Linearmotoren, elektromagnetische Aktuatoren, Schneckengetriebe, Gewindespindeln, Kurvenscheiben, Kulissen und/oder dergleichen aufweisen.

Gemäß einer konkreten Ausführungsform kann vorgesehen sein, dass der Radpositionierungsmechanismus je Rad einen mit dem jeweiligen Antriebsmittel gekoppelten Gewindetrieb aufweist, wobei der Gewindetrieb dabei Teil einer Linearführung sein könnte. In vorteilhafter Weise kann der Gewindetrieb mittels eines Riemengetriebes, einer Zahnstange, einer Zahnkette oder dergleichen mit dem jeweiligen Antriebsmittel gekoppelt sein. Gemäß einer bevorzugten Ausgestaltung ist dabei vorgesehen, dass die den Rädern eines Rad-Paares zugeordneten Gewindetriebe gegenläufig arbeiten, um so das eine Rad des Rad-Paares anzuheben, während das andere Rad des Rad-Paares abgesenkt wird. Alternativ könnte der Gegenlauf der Räder auch über eine gegenläufige Kopplung der jeweiligen Gewindetriebe mit dem Antriebsmittel realisiert werden, während die Gewindetriebe selbst gleichläufig arbeiten.

Im Rahmen einer bevorzugten Ausführungsform sind die Antriebsmittel über einen Kniehebel-Mechanismus mit dem jeweiligen Rad gekoppelt, welcher vorzugsweise unmittelbar an der jeweiligen Seitenwand des Fahrzeugkörpers angreift. Ein Kniehebel-Mechanismus bietet den Vorteil eines nichtlinearen Kraftverlaufs mit einer sehr geringen Belastung im angehobenen Zustand. Zudem lässt sich der Mechanismus mit einem sehr schmalen Aufbau realisieren. Im Hinblick auf den bei einem Wechsel der Radsätze vorherrschenden Ablauf der abgestimmten Hub- und Senkbewegung der einzelnen Räder bietet der Kniehebel-Mechanismus durch sein nichtlineares Übersetzungsverhältnis die Möglichkeit, eine konstante Antriebskraft in die benötigte, von der aktuellen Fahrwerksposition abhängigen Hubkraft am Fahrwerk zu übersetzen. Weiterhin verringert der nichtlineare Kraftverlauf die benötigte Leistung der Antriebsmittel, was die Verwendung von platzsparenden Antrieben ermöglicht und folglich die Realisierung eines schmalen Aufbaus unterstützt.

Das erfindungsgemäße Lager- und Entnahmesystem für Behälter, welches mindestens ein erfindungsgemäßes Transportfahrzeug aufweist, umfasst eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Behältern aufzunehmen. Die Gitterstruktur definiert dabei die Längstransportwege für eine Bewegung des Transportfahrzeugs in einer Längsrichtung (x) sowie die Quertransportwege für eine Bewegung des Transportfahrzeugs in einer Querrichtung (z).

In einer vorteilhaften Ausgestaltung umfasst das Transportfahrzeug Mittel zum Aufnehmen, Transportieren und Absetzen von in der Behälter-Lagerstruktur gelagerten Behältern. Gemäß einer konkreten Ausführungsform kann das Transportfahrzeug hierzu im Inneren des Fahrzeugkörpers ein geeignetes Lastaufnahmemittel aufweisen, mit dem ein Behälter in einen bspw. im Inneren des Fahrzeugkörpers ausgebildeten Hohlraum befördert werden kann.

In weiter vorteilhafter Weise sind die Radsätze sowie der Radpositionierungsmechanismus mitsamt Antriebsmitteln derart ausgestaltet, dass die Gesamtkonstruktion eine bauliche Tiefe in einer zu der jeweiligen Seitenwand orthogonalen Richtung von 100 mm oder weniger, besonders bevorzugt von 40 mm oder weniger aufweisen. Dadurch wäre ein Transportfahrzeug realisiert, welches insbesondere in den standardisierten Varianten von KLT (Kleinladungsträger) Systemen eingesetzt werden könnte, und welches dabei bei zentraler Position des Transportfahrzeugs über einer Lagersäule allseitig von anderen Transportfahrzeugen passiert werden könnte.

Es gibt nun verschiedene Möglichkeiten, die Lehre der vorliegenden Erfindung in vorteilhafter Weise auszugestalten und weiterzubilden. Dazu ist einerseits auf die abhängigen Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Perspektivansicht ein Transportfahrzeug gemäß einem Ausführungsbeispiel der Erfindung,
- Fig. 2: in einer schematischen Perspektivansicht einen Radpositionierungsmechanismus des Transportfahrzeugs gemäß Fig. 1 in einer vergrößerten Darstellung,
- Fig. 3: in einer schematischen Seitenansicht das Transportfahrzeug gemäß Fig. 1 mit einer Positionierung der Radsätze für eine Bewegung des Transportfahrzeugs in einer Längsrichtung (x),
- Fig. 4: in einer schematischen Seitenansicht das Transportfahrzeug gemäß Fig. 1 mit einer Positionierung der Radsätze in einer Radwechselstellung,
- Fig. 5: in einer schematischen Seitenansicht das Transportfahrzeug gemäß Fig. 1 mit einer Positionierung der Radsätze für eine Bewegung des Transportfahrzeugs in einer Querrichtung (z),
- Fig. 6: in einer schematischen Draufsicht eine Gitterstruktur eines für den Einsatz eines Transportfahrzeugs gemäß einem Ausführungsbeispiel der Erfindung geeigneten Lager und Entnahmesystems für Behälter, und
- Fig. 7: in einer schematischen Schnittdarstellung ein Transportfahrzeug gemäß einem Ausführungsbeispiel der Erfindung.

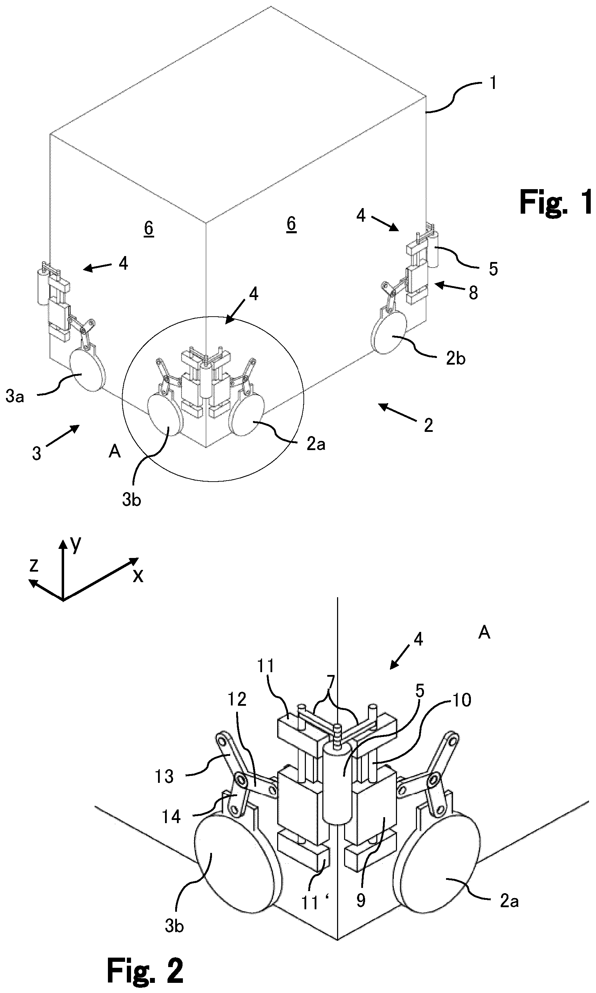

Fig. 1 zeigt in einer schematischen Perspektivdarstellung ein Transportfahrzeug gemäß einem Ausführungsbeispiel der Erfindung. Fig. 2 zeigt den in Fig. 1 markierten Ausschnitt ,A' in einer vergrößerten Darstellung.

Das Transportfahrzeug umfasst einen Fahrzeugkörper 1 sowie ein mit dem Fahrzeugkörper 1 verbundenes Fahrwerk. Das Fahrwerk umfasst zwei x-Radsätze 2, 2', die für eine Bewegung des Transportfahrzeugs entlang von Längstransportwegen in einer Längsrichtung x eingerichtet sind, sowie zwei z-Radsätze 3, 3', die für eine Bewegung des Transportfahrzeugs entlang von Quertransportwegen in einer Querrichtung z eingerichtet sind. In der perspektivischen Darstellung von Fig. 1 sind jeweils nur die vorderen Radsätze 2, 3 zu sehen, während die entsprechenden auf den gegenüberliegenden Seiten des Fahrzeugkörpers 1 angeordneten Radsätze 2', 3' durch den Fahrzeugkörper 1 verdeckt sind.

Des Weiteren umfasst das Transportfahrzeug einen Radpositionierungsmechanismus, welcher dazu eingerichtet ist, geeignete Höhenbewegungen der Räder der x-Radsätze 2, 2' und der z-Radsätze 3, 3' in y-Richtung derart zu bewirken, dass für eine Bewegung des Transportfahrzeugs in Längsrichtung x nur die Räder der x-Radsätze 2, 2' abgesenkt und mit dem jeweiligen Fahrweg in Kontakt sind, während die Räder der z-Radsätze 2, 2' angehoben und nicht mit dem jeweiligen Fahrweg in Kontakt sind, und umgekehrt.

In erfindungsgemäßer Weise umfasst der Radpositionierungsmechanismus Antriebsmittel 4, die jeweils auf die Räder eines Rad-Paares gemeinsam einwirken. Ein Rad-Paar umfasst dabei jeweils ein Rad eines x-Radsatzes 2, 2' und ein hierzu über Eck benachbartes Rad eines z-Radsatzes 3, 3'. In dem dargestellten Ausführungsbeispiel umfasst jeder Radsatz zwei Räder 2a, 2b, 3a, 3b, wobei diese paarweise über Eck einem Antriebsmittel 4 zugeordnet sind. So wirkt bspw. das in Fig. 2 vergrößert dargestellte Antriebsmittel 4 auf das Rad 2a des x-Radsatzes 2 sowie gleichzeitig auf das über Eck benachbarte Rad 3b des z-Radsatzes 3. Mit anderen Worten werden je zwei über Eck benachbarte Räder jeweils gemeinsam von einem Antriebsmittel 4 bewegt.

In dem dargestellten Ausführungsbeispiel weisen die Antriebsmittel 4 jeweils einen Motor 5 auf, welcher vorzugsweise symmetrisch angeordnet ist und dementsprechend auf bzw. an der Kante der angrenzenden Seitenwände 6 des rechteckig bzw. im Wesentlichen rechteckig ausgebildeten Fahrzeugkörpers 1 positioniert ist. Der Motor 5 ist über einen Riementrieb 7 mit an den jeweiligen Seitenwänden 6 montierten Linearführungen 8 gekoppelt. Im Rahmen einer konkreten Ausgestaltung weisen die Antriebsmittel 4 jeweils einen Hubschlitten 9 auf, der mittels einer Spindeleinrichtung 10 entlang der vertikal ausgerichteten Linearführung 8 zwischen einem oberen und einem unteren Anschlagsblock 11, 11' verfahrbar ist.

An dem Hubschlitten 9 ist jeweils ein Druckhebel 12 drehbeweglich angelenkt. Der Druckhebel 12 ist Bestandteil eines Kniehebel-Mechanismus, wobei an dem von dem Hubschlitten 9 wegweisenden Ende des Druckhebels 12 jeweils ein oberer Kniehebel 13 sowie ein unterer Kniehebel 14 angelenkt sind. Das von dem Druckhebel 12 wegweisende Ende des unteren Kniehebels 14 ist jeweils drehbeweglich an einer Aufhängung des jeweiligen Rades 2a, 2b, 3a, 3b angelenkt, während das von dem Druckhebel 12 wegweisende Ende des oberen Kniehebels 13 drehbeweglich an der jeweiligen Seitenwand 6 des Fahrzeugkörpers 1 festgelegt ist. Sowohl die Druckhebel 12 als auch die Kniehebel 13, 14 sind vorzugsweise aus Kunststoff oder als Aluminium-Flachprofile ausgeführt.

In dem gezeigten Ausführungsbeispiel sind die den jeweiligen Rädern eines Rad-Paares zugeordneten Spindeleinrichtungen 10 gegenläufig ausgeführt. Bei einer Aktivierung des Motors 5 zur Realisierung eines Radwechsels wandert dementsprechend der dem einen Rad des Rad-Paares zugeordnete Hubschlitten 9 auf der zugehörigen Spindeleinrichtung 10 nach oben, während der dem anderen Rad des Rad-Paares zugeordnete Hubschlitten 9 auf der zugehörigen Spindeleinrichtung 10 nach unten verfährt.

Fährt der Hubschlitten 9 auf der Spindeleinrichtung 10 nach oben, entsteht eine zunehmende Neigung des Druckhebels 12, wodurch der gemeinsame Anlenkpunkt des unteren Kniehebels 14 und des oberen Kniehebels 13 an dem Druckhebel 12 in Richtung der Spindeleinrichtung 10 wandert, d.h. das aus unterem und oberem Kniehebel 14, 13 gebildete Knie wird gebeugt. Folglich verringert sich der Abstand in vertikaler Richtung zwischen dem unteren Anlenkpunkt des unteren Kniehebels 14 an der Radaufhängung und dem relativ zu dem Fahrzeugkörper 1 feststehenden oberen Anlenkpunkt des oberen Kniehebels 13, und das entsprechende Rad wird angehoben. Das Absenken des jeweils anderen Rades des Radpaares erfolgt in entsprechend umgekehrter Weise.

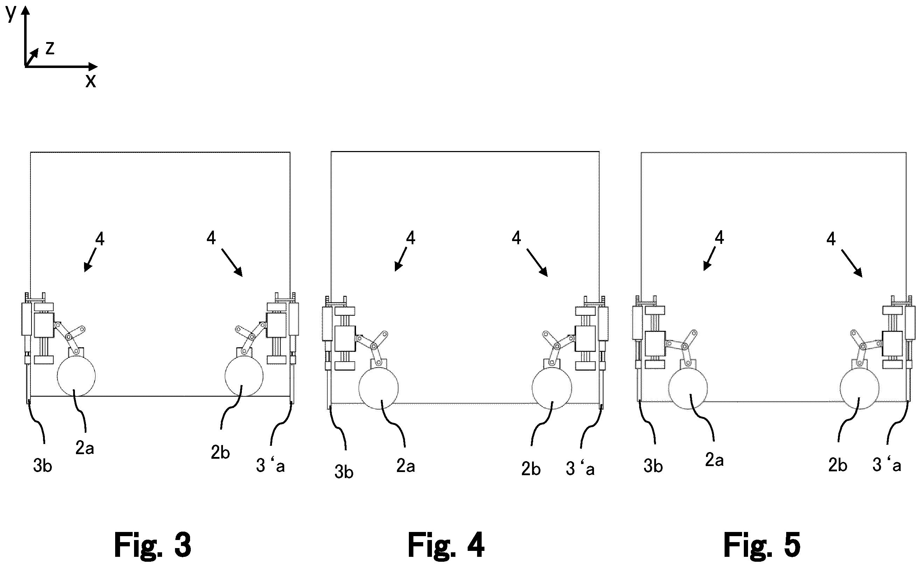

Die Fig. 3, 4 und 5 zeigen eine Sequenz eines Radwechsels bei einem Transportfahrzeug gemäß einem Ausführungsbeispiel der Erfindung. In der Darstellung gemäß Fig. 3 sind die Räder der x-Radsätze 2, 2' vollständig angehoben (d.h. die entsprechenden in Vorderansicht gezeigten Hubschlitten 9 der Antriebe 4 befinden sich in der oberen Anschlagsposition) und die Räder der z-Radsätze 3, 3' vollständig abgesenkt (d.h. die entsprechenden in Seitenansicht gezeigten Hubschlitten 9 der Antriebe 4 befinden sich in der unteren Anschlagsposition). Dementsprechend ist das Transportfahrzeug für eine Bewegung in der Querrichtung z (d.h. orthogonal zur Zeichenebene) konfiguriert.

Fig. 4 zeigt die Situation während eines Radwechselvorgangs, um von der Bewegung des Transportfahrzeugs in der Querrichtung z zu einer Bewegung in die Längsrichtung x zu wechseln. Dazu werden die Motoren 5 aller vier Antriebsmittel 4 derart betätigt, dass die Räder der x-Radsätze 2, 2' abgesenkt werden, wobei durch die paarweise Kopplung von Rädern über Eck und die gegenläufig ausgebildeten Spindeleinrichtungen 10 gleichzeitig die Räder der z-Radsätze 3, 3' abgesenkt werden. In der in Fig. 4 dargestellten Situation befinden sich dementsprechend sämtliche Hubschlitten 9 in einer Mittelposition und das Transportfahrzeug steht sowohl auf den Rädern der x-Radsätze 2, 2' als auch auf den Rädern der z-Radsätze 3, 3' auf.

Fig. 5 zeigt die Situation nach Abschluss des Radwechselvorgangs. Nunmehr sind die Räder der z-Radsätze 3, 3' vollständig angehoben (d.h. die entsprechenden in Seitenansicht gezeigten Hubschlitten 9 der Antriebe 4 befinden sich in der oberen Anschlagsposition) und die Räder der x-Radsätze 2, 2' sind vollständig abgesenkt (d.h. die entsprechenden in Vorderansicht gezeigten Hubschlitten 9 der Antriebe 4 befinden sich in der unteren Anschlagsposition). Dementsprechend ist das Transportfahrzeug für eine Bewegung in der Querrichtung x konfiguriert.

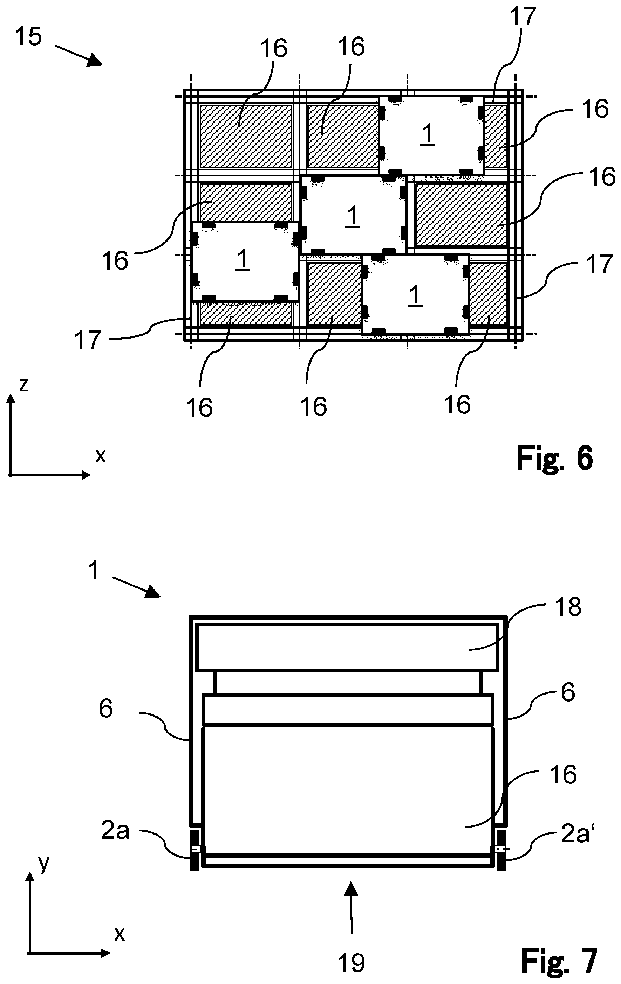

Fig. 6 zeigt schematisch den Einsatz eines erfindungsgemäßen Transportfahrzeugs in einem als Blocklager 15 ausgeführten Lager- und Entnahmesystem für Behälter 16. Das Blocklager 15 umfasst als oberen Abschluss eine als Schienenraster 17 ausgeführte Gitterstruktur auf, welche die Längstransportwege in x-Richtung und die Quertransportwege in y- Richtung für das bzw. die Transportfahrzeuge definiert. Das Schienenraster 17 ist dementsprechend im Sinne eines Schachbrettmusters auf das jeweilige von oben zu bedienende Blocklager 15 abgestimmt. Bei dieser Variante eines Lagers sind Lagerbehälter 16 übereinandergestapelt und es wird, im Vergleich zu anderen automatisierten Lagervarianten, ein sehr hoher Raumnutzungsgrad erreicht. Zum Erreichen einer möglichst hohen Leistung ist das Schachbrettmuster auf dem Blocklager 15 so gestaltet, dass der Einsatz einer möglichst großen Anzahl an Transportfahrzeugen gemäß Ausführungsformen der Erfindung ermöglicht ist und diese gleichzeitig unmittelbar nebeneinander im Blocklager 15 agieren können.

Das Transportfahrzeug gemäß Fig. 6 ist derart dimensioniert, dass es nur einen einzelnen Gitterplatz der Gitterstruktur belegt, d.h. mit anderen Worten bei zentraler Position über einer Lagersäule allseitig von anderen Transportfahrzeugen passiert werden kann. Eine derartige Dimensionierung kann durch entsprechend schmal bauende Komponenten sowohl des Radpositionierungsmechanismus als auch der Räder selbst erreicht werden. Es sei jedoch angemerkt, dass die vorliegende Erfindung nicht auf eine derartige Dimensionierung der Transportfahrzeuge beschränkt ist, dass das Transportfahrzeug vielmehr nahezu beliebig dimensioniert sein kann. Wenngleich dies beim Einsatz einer Vielzahl von Transportfahrzeugen auf der Gitterstruktur eine eingeschränkte Bewegungsfreiheit der einzelnen Transportfahrzeuge zur Folge haben kann, kann eine größere Dimensionierung der Transportfahrzeuge (sämtlicher oder auch nur einzelner der eingesetzten Transportfahrzeuge) in bestimmten Situationen wünschenswert sein, um bspw. mehr als einen Lagerbehälter 16 je Transportfahrzeug aufnehmen und transportieren zu können.

Fig. 7 zeigt beispielhaft ein Transportfahrzeug gemäß einem Ausführungsbeispiel der Erfindung in einer geschnittenen Darstellung. Das Transportfahrzeug umfasst ein im Inneren des Fahrzeugkörpers 1 angeordnetes Lastaufnahmemittel 18 zur Entnahme eines Behälters 16 aus dem von oben zu bedienenden Blocklager 15. Zum Beispiel kann hierbei ein auf die ggf. ausgewählte KLT-Variante abgestimmter Mechanismus vorgesehen sein, der die Behälter 16 aus einer Tiefe von beispielsweise bis zu 9 m zuverlässig nach oben befördern kann. Weiterhin ist eine robuste Verbindung zwischen Lastaufnahmemittel 18 und Behälter 16 vorgesehen, die zum einen platzsparend ist und zum anderen schnell fixier- und lösbar ist. Zur Kostenminimierung ist bei der Schnittstellengestaltung von Lastaufnahmemittel 18 und Ladungsträger bzw. Behälter 16 vorgesehen, dass die kostenintensiveren Bauteile und Baugruppen im Lastaufnahmemittel 18 verbaut sind und die Schnittstelle am Behälter 16 so einfach wie möglich gehalten ist, so dass hier auf standardisierte Kleinladungsträger zurückgegriffen werden kann. Dabei ist berücksichtigt, dass die Anzahl an Behältern 16 die Anzahl an Transportfahrzeugen und damit auch der Lastaufnahmemittel 18 um einen hohen Faktor übersteigen kann. Des Weiteren ist im Inneren des Fahrzeugkörpers 1 ein Hohlraum 19 ausgebildet, in dem ein Behälter 16 während eines Transports durch das Transportfahrzeug aufgenommen werden kann.

Die Energieversorgung des Transportfahrzeugs basiert vorzugsweise auf einem mitfahrenden Energieträger.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Fahrzeugkörper
- 2, 2': x-Radsätze
- 2a, 2b: x Räder
- 3, 3': z-Radsätze
- 3a, 3b: z-Räder
- 4: Antriebsmittel
- 5: Motor
- 6: Seitenwand
- 7: Riementrieb
- 8: Linearführung
- 9: Hubschlitten
- 10: Spindeleinrichtung
- 11, 11': oberer/unterer Anschlagsblock
- 12: Druckhebel
- 13: oberer Kniehebel
- 14: unterer Kniehebel
- 15: Blocklager
- 16: Behälter
- 17: Schienenraster
- 18: Lastaufnahmemittel
- 19: Hohlraum

## Patentansprüche

1. Lager- und Entnahmesystem für Behälter, umfassend:
eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Behältern (16) aufzunehmen, und wobei die Gitterstruktur Längstransportwege in einer Längsrichtung (x) und Quertransportwege in einer Querrichtung (z) definiert, sowie
mindestens ein Transportfahrzeug umfassend
einen Fahrzeugkörper (1),
Mittel zum Aufnehmen, Transportieren und Absetzen von in der Behälter-Lagerstruktur gelagerten Behältern (16),
ein mit dem Fahrzeugkörper (1) verbundenes Fahrwerk, wobei das Fahrwerk zwei x-Radsätze (2, 2') umfasst, die für eine Bewegung des Transportfahrzeugs entlang der Längstransportwege der Gitterstruktur eingerichtet sind, und wobei das Fahrwerk zwei z-Radsätze (3, 3') umfasst, die für eine Bewegung des Transportfahrzeugs entlang der Quertransportwege der Gitterstruktur eingerichtet sind, und
einen Radpositionierungsmechanismus, der eingerichtet ist, selektiv entweder die Räder der x-Radsätze (2, 2') mit den Längstransportwegen oder die z-Radsätze (3, 3') mit den Quertransportwegen in Kontakt zu bringen, um so eine Bewegung des Transportfahrzeugs entweder in die Längsrichtung oder in die Querrichtung zu ermöglichen,
wobei der Radpositionierungsmechanismus Antriebsmittel (4) aufweist, die jeweils auf die Räder eines Rad-Paares gemeinsam einwirken, wobei ein Rad-Paar jeweils ein Rad eines x-Radsatzes (2, 2') und ein hierzu über Eck benachbartes Rad eines z-Radsatzes (3, 3') umfasst,
**dadurch gekennzeichnet, dass** die Antriebsmittel (4) des Radpositionierungsmechanismus miteinander synchronisiert sind und jeweils gegenläufig auf die beiden Räder des jeweiligen Rad-Paares einwirken.

2. Lager- und Entnahmesystem nach Anspruch 1, **dadurch gekennzeichnet, dass** ein Radsatz (2, 2'; 3, 3') zwei beabstandet zueinander an einer jeweiligen Seitenwand (6) des Fahrzeugkörpers (1) angeordnete Räder (2a, 2b, 2'a, 2'b; 3a, 3b, 3'a, 3'b) umfasst.

3. Lager- und Entnahmesystem nach Anspruch 1 oder 2, **dadurch gekennzeichnet, dass** die Antriebsmittel (4) des Radpositionierungsmechanismus eingerichtet sind, ein Rad des jeweiligen Rad-Paares anzuheben und gleichzeitig das andere Rad des jeweiligen Rad-Paares abzusenken.

4. Lager- und Entnahmesystem nach einem der Ansprüche 1 bis 3, **dadurch gekennzeichnet, dass** die Räder (2a, 2b, 2'a, 2'b; 3a, 3b, 3'a, 3'b) derart an dem Fahrzeugkörper (1) angeordnet sind, dass während eines von dem Radpositionierungsmechanismus bewirkten Radwechsels ein ununterbrochener Kontakt von Rädern mit den jeweiligen Transportwegen gegeben ist.

5. Lager- und Entnahmesystem nach einem der Ansprüche 1 bis 4, **dadurch gekennzeichnet, dass** der Radpositionierungsmechanismus je Rad einen mit dem jeweiligen Antriebsmittel (4) gekoppelten Gewindetrieb aufweist.

6. Lager- und Entnahmesystem nach Anspruch 5, **dadurch gekennzeichnet, dass** der Gewindetrieb mittels eines Riementriebes (7), einer Zahnstange, einer Zahnkette oder dergleichen mit dem jeweiligen Antriebsmittel (4) gekoppelt ist.

7. Lager- und Entnahmesystem nach Anspruch 5 oder 6, **dadurch gekennzeichnet, dass** die den Rädern eines Rad-Paares zugeordneten Gewindetriebe gegenläufig arbeiten.

8. Lager- und Entnahmesystem nach einem der Ansprüche 1 bis 7, **dadurch gekennzeichnet, dass** die Antriebsmittel (4) über einen Kniehebel-Mechanismus mit dem jeweiligen Rad gekoppelt sind.

9. Lager- und Entnahmesystem nach einem der Ansprüche 1 bis 8, **dadurch gekennzeichnet, dass** das Fahrwerk zusammen mit dem Radpositionierungsmechanismus eine bauliche Tiefe in einer zu einer jeweiligen Seitenwand (6) des Fahrzeugkörpers (1) orthogonalen Richtung von weniger als 100 mm, vorzugsweise von 40 mm oder weniger aufweist.
